Europäisches Patentamt

European Patent Office

Office européen des brevets

(19)

(11) Publication number: **0 135 072**

**A1**

(12) # EUROPEAN PATENT APPLICATION

(21) Application number: **84108913.9**

(22) Date of filing: **27.07.84**

(51) Int. Cl.⁴: **H 01 J 29/51**
    **H 04 N 17/00**

(30) Priority: **27.07.83 JP 135858/83**

(43) Date of publication of application:
**27.03.85 Bulletin 85/13**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Kato, Katutoshi**
**2433-20, Nasecho Totsuka-ku**
**Yokohama(JP)**

(72) Inventor: **Tagawa, Hiroatsu**
**142-go, Hitachi-Hozue Apartment House**
**290, Shimogirimachi Takayama-shi(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **In-line color picture tube having magnetic convergence device and magnetizer apparatus for magnetic convergence device.**

(57) A strip shaped magnetic sheet (13) is wrapped around the periphery of the neck section of an in-line color picture tube (11). Eight magnetizing coils (41 to 48) are disposed around said strip shaped magnetic sheet at intervals of 45°, and predetermined patterns are imaged on said color picture tube. Reference tables indicating the relationship between the error of the generated pattern and magnetization currents for compensating the error are stored in a memory (76) beforehand. A CPU (74) reads out a current corresponding to the detected error and controls magnetizing circuits (80, 82) so as to let flow said current through a determined magnetizing coil. After demagnetization has been completed, said eight magnetizing coils are removed from the neck section.

F I G. 4

EP 0 135 072 A1

IN-LINE COLOR PICTURE TUBE HAVING MAGNETIC

CONVERGENCE DEVICE AND MAGNETIZER

APPARATUS FOR MAGNETIC CONVERGENCE DEVICE

The present invention relates to a color picture tube having a magnetic convergence device for static convergence and relates to a magnetizer apparatus for the magnetic convergence device of color picture tube.

An adjustment device used for adjusting static convergence of an in-line color picture tube is disclosed in the United States Patent No. 3,725,831. The adjustment device includes a first adjustable magnetic field generator and a second adjustable magnetic field generator. The first adjustable magnetic field generator is composed of two rings each having four magnetic poles disposed at intervals of 90° with alternate polarities. At the neck section, these rings are differentially rotated to move both side beams into mutually opposing directions while hardly affecting the central beam. The second adjustable magnetic field generator is composed of two rings each having six magnetic poles disposed at intervals of 60° with alternate polarities. At the neck section, these rings are differentially rotated to move both side beams while hardly affecting the central beam. In this adjustment device, adjustment is effected while magnet-rings are being rotated. Therefore, it takes a long time to adjust the convergence. In addition, the adjustment device also has a drawback that it is expensive.

In a magnetization type static convergence device disclosed in the United States Patent No. 4,138,628, a magnetized material is disposed in the neck section. In a first cylindrical area of the magnetized material, a first group of six magnetic poles and a second group of six magnetic poles are formed. Six magnetic poles belonging to the first group are arranged at intervals of 60° for moving both side beams into the same horizontal direction. Six magnetic poles belonging to the second group used for moving both side beams into the same vertical direction are placed at positions obtained by rotating six magnetic poles belonging to the first group by 30°. In a second cylindrical area of the magnetized material adjoining the first cylindrical area, a third group of four magnetic poles and a fourth group of four magnetic poles are formed. Four magnetic poles belonging to the third group are arranged at intervals of 90° for moving side beams into horizontal directions opposing each other. Four magnetic poles belonging to the fourth group used for moving side beams into vertical directions opposing each other are placed at positions obtained by rotating four magnetic poles belonging to the third group by +15° or -15°. In this magnetization method, interference between groups exists. Therefore, the first to fourth groups must be magnetized alternately and stepwise. And the magnetization work must be repeated a large number of times until the final magnetization magnetic field is obtained. Since the first and second cylindrical areas are provided in the tube axis direction around the neck section, this magnetization method has a drawback that the width of the magnetized material in the tube axis direction becomes wide.

In the magnetization method disclosed in the United States Patent No. 4,105,983, adjustable currents are let flow through coils arranged at angle intervals of 45° to produce a quasi magnetic field. Current values giving proper static convergence are stored into a memory. Based on those data, the cylindrical magnetized material provided around the neck section is so magnetized as to have eight magnetic poles at angle intervals of 45°. The prior art does not tell how the quasi magnetic field of eight magnetic poles is to be established, i.e., how the polarity and magnitude of each of eight magnetic poles is to be established. Another drawback of that prior art exists in complicated adjustment work since the quasi magnetic field must be once produced to obtain the magnetization data.

An object of the present invention is to provide an in-line color picture tube having a magnetic convergence device which overcomes the above described drawbacks and yields the in-line static convergence in a short time and with a low cost.

Another object of the present invention is to provide a magnetizing device for the above described magnetic convergence device.

In accordance with the present invention, four magnetic poles which have been alternately selected out of eight magnetic poles disposed on a circumference at angle intervals of 45° constitute a first set of magnetic poles and four remaining magnetic poles constitute a second set of magnetic poles. Each of the first set and the second set of magnetic poles generates both of the first direction component and the second direction component of magnetic fields. In each of the magnetic fields both side electron beams included in electron beams which are arranged in line are moved into directions opposing each other. The first direction refers to the direction in which the electron guns are arranged, for example. And the second direction is perpendicular to the first direction. Four magnetic poles belonging to the first set are positioned on intersections of the circumference of a circle and lines extending from the tube axis to the first and second directions. And four magnetic poles belonging to the second set are disposed at positions displaced from the positions of the magnetic poles belonging to the first set by 45°. Polarities of the magnetic poles are defined so that magnetic poles adjoining each other will have polarities opposing each other. Magnitudes of magnetic poles are defined as follows. Two magnetic poles of the first set which exist on the first direction may have magnitudes defined independently each other. Each of magnetic poles of the first set which exist on the second direction has half the sum of magnitudes of magnetic poles located on the first direction. Therefore, each magnetic fields opposing in the first direction which exerts influence upon each side electron beam, respectively, may be defined independently. Accordingly, movement distances of both side electron beams in the second direction may be defined independently. As for the magnetic poles of the second set, two pairs of magnetic poles located nearly on the second direction when seen from respective side electron beams may have magnitudes independently defined, respectively. That is to say, two magnetic poles of each pair are the same in magnitude and opposite in polarity. Therefore, each magnetic field opposing in the second direction which exerts influence upon each side electron beam, respectively, may be defined independently. Accordingly, movement distances of both side electron beams in the first direction may be defined independently.

Since in-line type electron beams are arranged in line, both side electron beams are usually located at nearly symmetrical positions with respect to the central electron beam. It is extremely rarely the case that both side electron beams deviate in the same sense for the direction perpendicular to the electron gun arrangement direction. In such a case, both side electron beams can be forcibly moved to symmetrical positions with respect to the central electron beam by magnetizing magnetic poles strongly with the above described polarities. By detecting devication under that state and demagnetizing the magnet poles magnetized strongly, proper static convergence can be obtained.

Since magnetic fields generated by the first and second sets meet at right angles each other, mutual interference is not incurred. Thus, magnitudes of magnetic poles belonging to respective sets may be defined independently. By deriving the relationship between the magnetization magnitude and the movement distance of the electron beam beforehand, therefore, the objective magnetization magnitude can be readily obtained from the detected deviation of both side electron beams with respect to the central electron beam. As a result, it becomes possible to obtain a magnetic convergence device realizing proper static convergence in a very short time.

The present invention will be apparent from the following detailed description taken in conjunction with the accompanying drawings, in which:

Fig. 1 illustrates relationship between positions of three electron beams before the static convergence is to be adjusted;

Figs. 2 and 3 are sectional views of the neck section of a color picture tube seen from the neck section toward the tube face for illustrating the principle of the present invention;

Fig. 4 is a perspective view of an embodiment of the present invention;

Fig. 5 is a sectional view of the neck section of the color picture tube for illustrating how magnetizing coils are disposed around a magnetic substance sheet;

Fig. 6 is a plane view of the magnetic substance sheet which has been magnetized;

Fig. 7 is a block diagram of an example of a magnetizer apparatus which detects the deviation in the static convergence and generates a magnetization current for compensating the deviation;

Figs. 8 and 9 illustrate adjustment patterns imaged on a color picture tube to be adjusted; and

Fig. 10 shows waveforms of video signals produced by shooting the adjustment pattern illustrated in Fig. 8.

The present invention will now be described by referring to drawings.

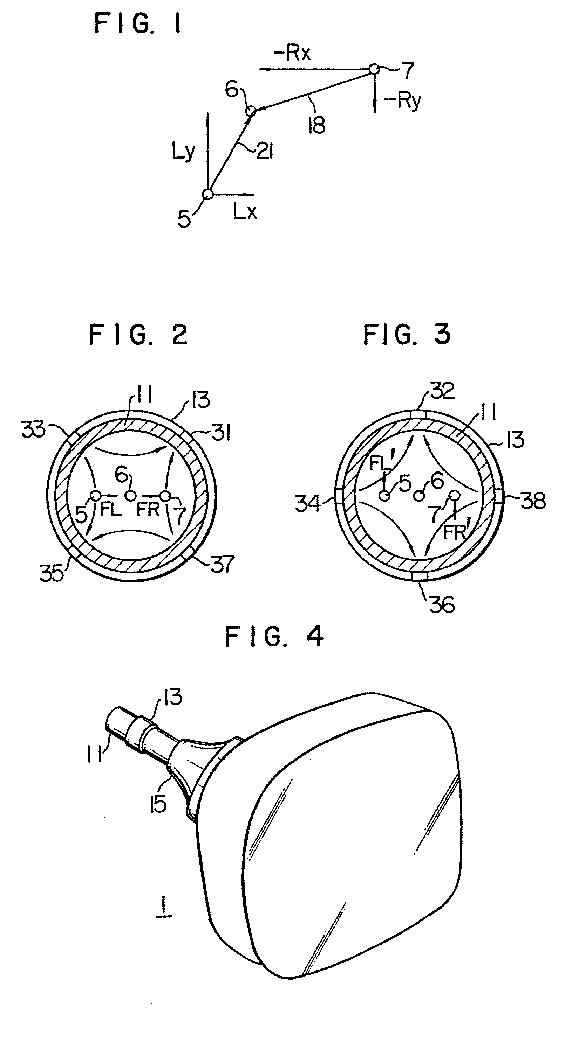

Fig. 1 illustrates static convergence of an in-line color picture tube which is out of alignment. Ideally, three electron beams 5, 6 and 7 must converge to one point at the shadow mask position. Around the central electron beam, the right side electron beam 7 is deviated into the first quadrant side and the left side electron beam 5 is deviated into the third quadrant side. To attain the static convergence, the right side electron beam must be moved as represented by a vector 18 having a component $-R_Y$ in the ordinate axis direction which is perpendicular to the electron gun arrangement direction and having a component $-R_X$ in the abscissa axis direction which is the electron gun arrangement direction. In addition, the left side electron beam must be moved as represented by a vector 21 having a component $L_Y$ in the

ordinate axis direction and having a component $L_X$ in the abscissa axis direction. Since three electron guns are arranged in line, it is common that side electron beams deviate to points which are symmetrical with respect to the central electron beam as illustrated in the example of Fig. 1. In order to attain the static convergence, therefore, the left and right electron beams must be moved in senses opposing each other in both ordinate and abscissa axes. In order to obtain the magnetic fields for moving electron beams in this way, four magnetic poles alternately having the opposite polarity are arranged at intervals of 90° on the periphery of a tube 11 as illustrated in Fig. 2 and Fig. 3. In Fig. 2, magnetic poles 31, 33, 35 and 37 are disposed on axes which are respectively obtained by rotating the ordinate axis and abscissa axis of the tube 11 by 45°. The magnetic poles 33 and 37 are N poles and the magnetic poles 31 and 35 are S poles. Magnetic lines of force as represented by curved arrows are thus obtained. Accordingly, forces $F_L$ and $F_R$ in the abscissa axis direction are applied to the side electron beams 5 and 7, respectively. In this way, three electron beams are brought in line in the abscissa axis direction. In order to obtain magnetic fields for producing forces $F_L$ and $F_R$ respectively corresponding to the movement distance $L_X$ and $R_X$ without effecting complicated calculation, i.e., without generating undesired secondary magnetic fields, the magnetic poles 33 and 35 which are respectively positioned nearly above and below the left electron beam 5 and which have polarities opposing each other are made equal in magnitude, and the magnetic poles 31 and 37 which are respectively positioned nearly above and below the right electron beam and which have polarities opposing each other are made equal in magnitude. These magnetic poles 31, 33, 35 and 37 are inside polarities of the dipole magnets whose poles are formed in the direction of radius of the tube at predetermined positions of a strip shaped magnetic substance sheet 13 which is wrapped around the tube 11.

In Fig. 3, magnetic poles 32, 34, 36 and 38 are disposed on the ordinate and abscissa axes of the tube 11. The magnetic poles 34 and 38 are magnetized to be N poles and the magnetic poles 32 and 36 are magnetized to be S poles to yield magnetic lines of force as illustrated in Fig. 3. Since magnetic fields in the abscissa direction are applied to both side electron beams 5 and 7, force $F_L'$ and $F_R'$ are generated in the ordinate axis direction to bring three electron beams into line in the ordinate direction. The magnitudes of magnetic poles 34 and 38 are defined according to the movement distances $L_Y$ and $R_Y$. The magnitude of each of the magnetic poles 32 and 36 is defined to be half of the sum of magnitudes of magnetic poles 34 and 38. The magnetic poles 32, 34, 36 and 38 are formed on the strip shaped magnetic substance sheet in the same way as Fig. 2. In Figs. 2 and 3, the magnitude of magnetic poles generating the magnetic field which exerts influence on the left electron beam is usually different from the magnitude of magnetic poles generating the magnetic field which exerts influence on the right electron beam. However, the sum of magnitudes including the sign of four magnetic poles becomes zero. Accordingly, undesired magnetic field components are not produced. In addition, the direction of the magnetic fields which exert influence on side beams 5 and 7 as illustrated in Fig. 2 is perpendicular to the direction of the magnetic fields which exert influence on side beams 5 and 7 as illustrated in Fig. 3, mutual interference being completely prevented. Therefore, it is possible to readily derive the final magnetization polarity and magnitude from deviation in convergence, a magnetic convergence device yielding proper convergence being obtained in a very short time. In addition, the width of the strip shaped magnetic substance sheet in the tube axis direction can be made extremely short because eight magnetic poles 31 to 38 can be arranged in line without hindrance.

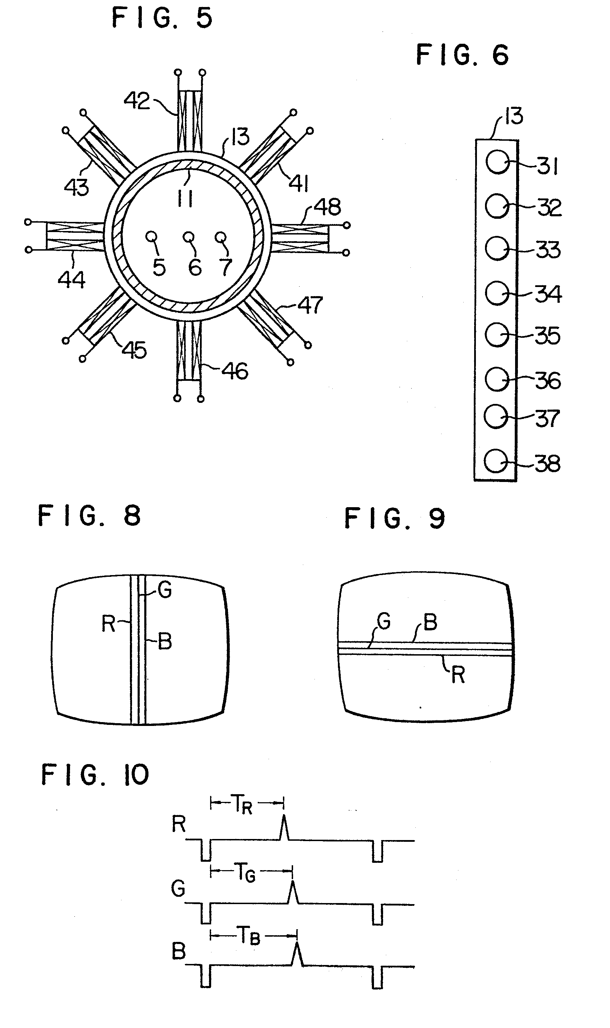

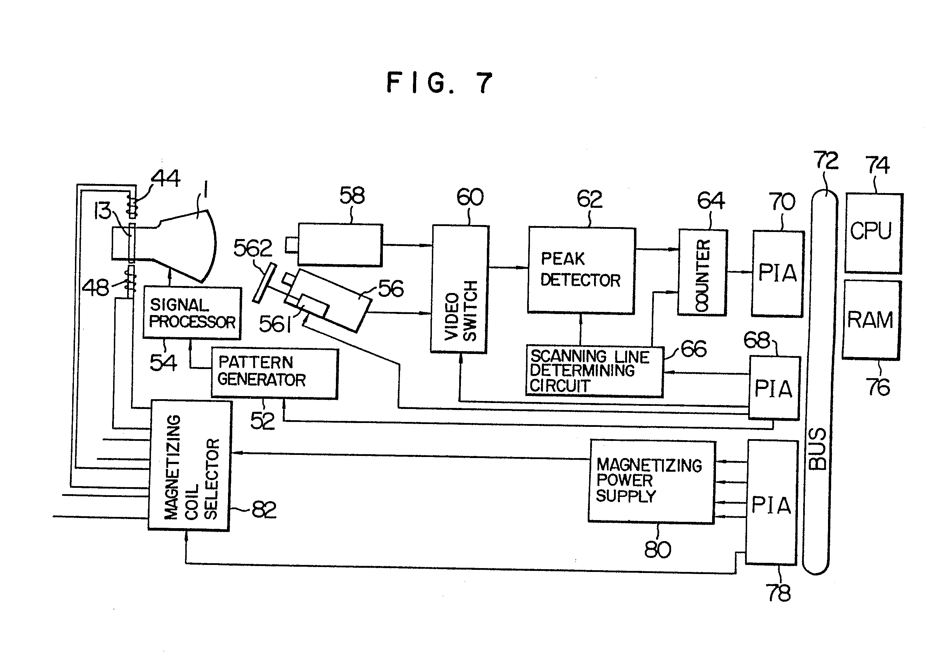

Fig. 4 is an oblique view for illustrating the magnetic convergence device 13 which has been fixed to the neck section together with a deflection yoke 15. Fig. 5 shows magnetizing coils 41 to 48 which are disposed around the neck section of a color picture tube 1 in order to form the magnetic poles 31 to 38 on the inner surface of the magnetic substance sheet 13 wrapped around the neck section. Magnetization currents fed to the magnetizing coils 41 to 48 are supplied by a device illustrated in Fig. 7. As illustrated in Fig. 6, therefore, magnetic poles are formed on the strip shaped magnetic substance sheet 13 wrapped around the neck section. When the strip shaped magnetic substance sheet 13 has been wrapped around the neck section, it is permitted that both ends of the sheet 13 overlap each other. Even if both ends are at a short distance, no trouble is incurred.

A recommended magnetization method consists of a step of magnetizing each magnetic pole position so as to produce a magnetic pole which is the same in polarity as and is much larger than the objective magnetic pole in magnitude and a step of demagnetizing the magnetic pole by magnetizing it with magnetism which is opposite in polarity to and is equal in magnitude to the excess over the objective magnetism. In addition, it is possible to obtain the desired magnitude of the magnetisum with a high success probability by effecting the demagnetization work in two substeps composed of a first substep for eliminating the greater part (nearly 95%) of the excess of magnetism and a second substep for eliminating the slightly remained excess magnetism.

It is extremely rarely the case that both side electron beams 5 and 7 deviate in the same sense of the ordinate axis direction with respect to the central electron beam 6. In such a case, four magnetic poles formed at angle intervals of 90° are alternately inverted in polarity as shown in Figs. 2 and 3 and are more magnetized than need be. Then the side electron beams 5 and 7 are moved beyond the deviation range and to senses opposing each other in the ordinate and abscissa directions, presenting position relationship as illustrated in Fig. 1. By demagnetizing magnetic poles according to the movement distances from that state, the static convergence can be attained.

Fig. 7 is a block diagram of an example of a magnetizer apparatus for supplying magnetization currents to the magnetizing coils 41 to 48 as illustrated in Fig. 5.

Referring to Fig. 7, a pattern generator 52 generates a high frequency signal whereby a white vertical or horizontal line can be imaged on a properly adjusted television receiver. A signal processor 54 receives the high frequency signal fed from the pattern generator 52 at its antenna input terminal and makes the color picture tube 1 generate a pattern corresponding to the high frequency signal. In general, the signal processor 54 and the color picture tube 1 including accessories constitute one set of color television receiver. Cameras 56 and 58 are respectively used to shoot the vertical line and horizontal line imaged on the picture tube. A filter driver 561 establishes a primary color to be taken into the camera 56 by rotating a disk 562 which has optical filters respectively passing one of the primary colors composed of red, green and blue. A video switch 60 is used to alternatively select

0135072

outputs of cameras 56 and 58. A peak detector 62 detects the peak value of the video signal fed from the cameras 56 and 58. A counter 64 measures the time interval from the horizontal or vertical synchronization signal, which is used as the count start signal and immediately precedes the peak detection signal, until the peak detection signal. The counter 64 has resolution of 10 nsec. A scanning line designation circuit 66 responds to a scanning line designation signal fed through a PIA 68 and places the peak detection circuit in the activation state. The scanning line designation circuit 66 also supplies the count start signal to the counter 64. A PIA 70 supplies the count of the counter 64 to a bus 72. A CPU 74 computes the magnetization data corresponding to the magnetization currents. A memory 76 is a ROM or RAM which stores the program for controlling the CPU 74 and stores the above described data. Magnetization data are supplied to the magnetization power supply 80 and a magnetizing coil selector 82 through a PIA 78. The bus 72 interconnecting PIA 68, PIA 70, PIA 78, CPU 74, and memory 76 includes address buses and data buses.

Based upon the magnetization data, the magnetizing power supply 80 generates currents to be fed to the magnetizing coils. The magnetizing coil selector 82 selects a magnetizing coil whereto the current is supplied and selects the predetermined current sense. Although only magnetizing coils 44 and 48 are illustrated in Fig. 7, the magnetizing coil selector 82 supplies

0135072

magnetizing currents to all of the magnetizing coils 41 to 48. These magnetizing coils 41 to 48 are applied to the magnetic substance sheet 13, which is wrapped around the neck section of the color picture tube, by a driver not illustrated and are removed after magnetization has been completed.

If a pattern signal which should cause a white line is supplied to a color television receiver wherein static convergence is not yet adjusted, three primary color lines rather than one white line are displayed as illustrated in Figs. 8 and 9. In order to obtain measurement precision not larger than 0.1 mm on the display screen, the pulse width of the vertical line is chosen to be 200 nsec and the horizontal line is represented by only one scanning line. In addition, noninterlace scanning is adopted to eliminate the influence of jitter, in which the horizontal scanning line of an even-numbered field overlaps with that of an odd-numbered field.

For the vertical line, primary colors are simultaneously radiated since the line width is narrow. When detecting the vertical line position by means of each primary color, therefore, the filter disk 562 placed just before the camera 56 must be rotated in accordance with the control command fed from the CPU 74 in order to pass only a desired primary color. For the horizontal line, the pattern generator 52 is controlled so as to output a high frequency signal generated by only one primary color. Accordingly, optical filters are not provided for the camera 58. The pattern generator 52 produces a white vertical line and horizontal lines of respective primary colors in accordance with control commands fed from the CPU 74 through the PIA 68. Generation of the vertical line, rotation of the filter disk 562 when the vertical line is generated, acquisition of the vertical line position data at each rotation position, generation of horizontal lines for each primary color, and acquisition of data at each primary color horizontal line position are carried out under sequence control by the CPU 74.

When the red line R, green line G, and the blue line B of the pattern illustrated in Fig. 8 are shooted by the camera 56, the resultant video signals have voltage waveforms as illustrated in Fig. 10. Fig. 10 shows the voltage waveforms during the horizontal scanning line period which is defined by the data stored in the memory 76 and during which the peak detection circuit 62 should be in the activation state. Since the counter 64 continues counting in the units of 10 nsec during periods $T_R$, $T_G$ and $T_B$, respective count values represent respective periods $T_R$, $T_G$ and $T_B$. Since the difference between count values represents the deviation, the CPU 74 calculates the difference from the count values stored in the memory 76. In the memory 76, reference tables are stored beforehand for respective magnetizing coils. Given a count difference value, the magnetization current data corresponding to the magnetization current required to compensate the difference can be obtained from the reference tables. The reference table is previously prepared for each types of the picture tubes by examining the relation between the amounts of beam deviation and the corresponding magnetization current, and then stored in the memory. Using the calculated result and the reference tables, the CPU 74 derives data for selecting a magnetizing coil whereto a magnetization current should be supplied, and data for defining the polarity and magnitude of the magnetization current to be fed to the magnetization coil which has been selected by just described data. The CPU 74 supplies these data to the magnetizing power supply 80 and the magnetizing coil selector 82. Thereby necessary magnetization currents are supplied to respective magnetizing coils. As described before, it is possible to obtain a stable magnetic pole in magnetization work by magnetizing magnetic poles excessively and thereafter demagnetizing them. In addition, it is desirable to image patterns not only on the central part of the screen but also on the peripheral part thereof in order to scatter detection points over the entire screen.

In accordance with the present invention heretofore described, the magnetic poles 31 to 38 giving proper static convergence can be formed on the magnetic substance sheet 13 in a short time and with fine precision. In addition, the width of the magnetic substance sheet 13

0135072

can be minimized because the magnetic poles 31 to 38 can be arranged in line.

0135072

1.      An in-line color picture tube (1) including three electron guns and a magnetic substance device (13) having eight magnetic poles (31 to 38) formed at angle intervals of 45° around the neck section of the picture tube, polarities of said magnetic poles being inverse at angle intervals of 90°, wherein said eight magnetic poles comprises;

two pairs of magnetic poles (33,35; 31,37) generating magnetic fields to apply forces ($F_L$, $F_R$) to both side electron beams (5, 7) in the direction of electron gun arrangement and having same magnitudes which correspond to deviations ($L_X$, $R_X$) of side electron beams from the central electron beam (6) measured in the electron gun arrangement direction;

two magnetic poles (34, 38) existing close to both side electron beams and having magnitudes defined by deviations ($L_X$, $R_X$) of side electron beams from the central electron beam in a direction perpendicular to the electron gun arrangement direction; and

the rest of two magnetic poles (32, 36) respectively having magnitudes which are equal to half the sum of magnitudes of said two magnetic poles (34, 38) existing close to side electron beams.

2.      An in-line color picture tube according to Claim 1, wherein said eight magnetic poles (31 to 38) are disposed around the neck section so that said two magnetic poles (34, 38) existing close to side electron beams exist on the plane including said three electron guns.

3.       An in-line color picture tube according to Claim 2, wherein said eight magnetic poles (31 to 38) exist on the same plane.

4.       An in-line color picture tube according to Claim 2, wherein said magnetic substance device comprises a strip sheet material which can be magnetized in its thickness direction and said strip sheet material is wrapped around the neck section.

5.       A magnetizer device for a magnetic convergence device comprising:

pattern generating means (52) for generating a plurality of primary color patterns which generate a white color pattern when they are simultaneously supplied to a color picture tube having properly adjusted static convergence;

imaging means (52, 54) for imaging said primary color patterns on a color picture tube (11) having a magnetized material to be magnetized at the neck section thereof;

camera means (56, 58) for shooting primary color patterns imaged on the picture tube;

deviation detecting means (74) for detecting the deviation of primary color patterns by processing output signals of said camera means;

memory means (76) for storing reference tables whereby magnetization data corresponding to magnetization currents required to magnetize said material to be magnetized for compensating given deviation can be obtained;

readout means (74) for reading out the magnetization data corresponding to the output of said deviation detecting means from said reference table;

a power supply (80) for generating magnetization currents in accordance with the magnetization data which have been read out; and

magnetizing coils (41 to 48) disposed close to said material to be magnetized, whereto said magnetization currents are supplied.

6.      A magnetizer device according to Claim 5, wherein said pattern generating means generates pattern signals whereby vertical and horizontal lines of primary colors are imaged on the color picture tube, and said camera means includes a first video camera (56) shooting the vertical line pattern and a second video camera (58) shooting the horizontal line pattern.

7.      A magnetizer device according to Claim 6, wherein said first video camera is provided with color filters of the primary colors between said color picture tube and said first video camera, and said first video camera can selectively shoot the individual primary color passing through said color filter.

8.      A magnetizer device according to any one of Claims 6 and 7, wherein said deviation detecting means further includes a peak detector detecting a peak level of said primary color patterns shooted by said first video

- 4 -

0135072

camera and a counter counting a time period from a horizontal synchronizing signal until the peak level is detected, said counted time period being corresponded to said deviation of the primary color patterns.

FIG. 1

FIG. 2

FIG. 3

FIG. 4

FIG. 5

FIG. 6

FIG. 8

FIG. 9

FIG. 10

FIG. 7

| | DOCUMENTS CONSIDERED TO BE RELEVANT | | EP 84108913.9 |
|---|---|---|---|

| Category | Citation of document with indication, where appropriate, of relevant passages | Relevant to claim | CLASSIFICATION OF THE APPLICATION (Int Cl 4) |
|---|---|---|---|
| Y | DE - A1 - 3 235 614 (DENKI)<br>* Fig. 11A, 11 B; page 24, line 15 - page 25, line 11; claims 1-2 *<br>-- | 1-4 | H 01 J 29/51<br>H 04 N 17/00 |
| Y | EP - A1 - 0 080 160 (GOODRICH)<br>* Page 1, lines 4-14; page 1, line 32 - page 2, line 6 *<br>-- | 1-4 | |
| A | US - A - 4 211 960 (BARTEN)<br>* Fig. 1-2; column 3, line 21 - column 4, line 37; claims *<br>-- | 5 | |
| A | US - A - 4 254 432 (NAKAHATA)<br>* Fig. 2; claims 1, 7-9 *<br>-- | 5 | TECHNICAL FIELDS SEARCHED (Int. Cl.4) |
| A | US - A - 4 193 086 (KAWAGUCHI)<br>* Fig. 5; column 4, line 14 - column 7, line 11; claims *<br>---- | 5 | H 01 J<br>H 04 N<br>H 01 F |

The present search report has been drawn up for all claims

| Place of search | Date of completion of the search | Examiner |
|---|---|---|
| VIENNA | 11-10-1984 | BRUNNER |